# EUROPEAN PATENT APPLICATION

(11) **EP 4 374 996 A1**
(43) Date of publication of application: **29.05.2024**
(21) Application number: 22209515.0
(22) Date of filing: 25.11.2022
(51) Int. Cl.: B23C 5/10, B23P 11/02

(54) **CUTTING TOOL BLANK AND CUTTING TOOL**

(71) Applicant: CERATIZIT Hard Material Solutions S.à r.l., 8232 Mamer (LU)
(72) Inventor: MAGIN, Michael, 8232 Mamer (LU); SCHELLENBERGER, Mathieu, 8232 Mamer (LU)
(74) Representative: Ciesla, Dirk

(57) **Abstract**

A cutting tool blank (1, 2000, 3000, 4000) comprising a cutting head blank (3, 30, 300) made from a sintered cemented carbide having a Vickers hardness in the range from 1700 HV10 to 2400 HV10 and a shaft (4, 42, 43, 405), wherein the cutting head blank (3, 30, 300) has a free end (5) which extends freely away from the shaft (4, 42, 43, 405) and an insertion end (6, 60, 600) press-fitted into the shaft (4, 42, 43, 405) under plastic shaft deformation, wherein the insertion end (6, 60, 600) has a shoulder surface (8, 80) which emerges from the free end (5) and is at least section-wise concavely rounded to provide a concavely rounded insertion sliding path (8a, 88).

## Description

The present invention relates to a cutting tool blank comprising a shaft and a cutting head blank.

The present invention relates further to a cutting tool made from a cutting tool blank.

The machining tool described in WO 2015/054708 A1 is advantageous over conventionally press fitted tools in that exact tolerances must not be maintained because plastic deformation is deliberately realized. Thus, no special treatment of the joined surfaces is required which reduces both manufacturing costs and time.

However, said machining tool has problems regarding machining medium-density fibreboards (MDF) and chip boards. MDF is a composite wood product traditionally formed by breaking down softwood into wood fibres, combining it with wax and a synthetic resin binder such as urea formaldehyde resins (UF) or other suitable bonding systems, and forming panels by applying high temperature and pressure.

Chipboard is traditionally manufactured by mixing particles or flakes of wood together with a resin or glue and forming the mixture into a sheet.

MDF and chipboard are thus man-made composite wood materials, in contrast to wood materials grown by nature.

Even cutting elements made from cemented carbide are subject to high wear rates when such man-made composite wood materials are machined, due to high feed rates needed for commercially feasible machining and due to the presence of resins and glues therein being chemically aggressive.

Hence, cemented carbide cutting elements used for machining man-made composite wood materials need a relative high hardness to allow for an appropriate lifetime, unlike when metal workpieces are machined where a lower hardness and thereby higher toughness is required on parts of the cutting elements.

A high hardness on the other side yields a more brittle cemented carbide which promotes crack formation especially when a bending moment is applied transverse to an axis along which the cutting elements extend. Thus, the prolonged lifetime for machining man-made composite wood materials by a harder cemented carbide is counteracted by an increased fracture risk.

The present invention has the objective to provide a cutting tool blank and a cutting tool which are manufactured faster and more cost efficient, have a longer tool lifetime for machining man-made composite wood materials and can be used under higher driving torques yielding a better cutting performance.

The objective is solved by the subject matter of claim 1 and claim 15. Preferred embodiments of the invention are disclosed in the dependent claims which can be freely combined amongst each other, the description, and the figures.

The cutting tool blank comprises a cutting head blank made from a sintered cemented carbide having a Vickers hardness in the range from 1700 HV10 to 2400 HV10 and a shaft, wherein the cutting head blank has a free end which extends freely away from the shaft and an insertion end press-fitted into the shaft under plastic shaft deformation, wherein the insertion end has a shoulder surface which emerges from the free end and is at least section-wise concavely rounded to provide a concavely rounded insertion sliding path.

The shoulder surface reduces due to its concave rounding stress concentrations in the cutting head blank. The breakage bending moment required to break the cutting head blank off the shaft is increased towards higher breakage bending moments which yields a tougher and thereby longer lasting cutting tool made from the cutting tool blank when man-made composite wood materials are machined, especially when structural inhomogeneities are encountered.

The fracture risk when the cutting head blank is pressed into the shaft is likewise reduced due the rounding of the shoulder surface, e.g., a higher misalignment between the shaft and the cutting head blank can be tolerated under pressing.

The plastic shaft deformation causes enough friction to secure the cutting head blank against torque twisting relative to the shaft which reduces production costs since the design of the insertion end can be kept free of torque engaging protrusions, which are also a source for fracture due to notch effects. Thus, preferably the cutting head blank is free of torque engaging protrusion.

The concave rounding of the shoulder surface provides a larger contact area with the shaft in comparison to a straight course.

Thus, the shoulder surface yields not only a better prevention against fracture but also a higher pressing force for securing the cutting head blank against torque twisting and also against axial withdrawal.

In contrast to a conventional press-fit, the plastic deformation caused by pressing the cutting head blank end into the shaft leads to microstructural changes of the shaft material which can be detected by a light microscope, e.g., grain elongation along a material flow pass.

Preferably the shoulder surface is a surface of revolution with respect to a longitudinal axis along which the cutting head blank extends since such a geometry causes a homogeneous plastic deformation of the shaft. This keeps the design of the shoulder surface simple and thereby cost efficient.

Preferably the free end is a body of revolution with respect to the longitudinal axis since this enables one to machine the cutting head blank into a mass balanced cutting head without removing too much of the sintered cemented carbide. This keeps the design of the free end simple and also enables one to grind various cutting-edge geometries in the free end.

Preferably the shaft is a body of complete revolution with respect to the longitudinal axis since this balances the mass of the shaft out.

The Vickers hardness HV10 of the sintered cemented carbide the cutting head blank is made of is measured according to the international standard ISO 3878:1991 ("Hardmetals - Vickers hardness test"). Since the Vickers hardness is in the range from 1700 HV10 to 2400 HV10, the sintered cemented carbide has a high enough wear resistance to both machine man-made composite wood materials and create sharp cutting edges from the cutting head blank.

In that the shoulder surface is at least section-wise concavely rounded in order to provide for the concavely rounded insertion sliding path is be understood to mean that the corresponding concave rounding of the shoulder surface is different from a rounding caused by a notch. The insertion sliding path makes the insertion of the insertion end smoother and suppresses notch-effects.

In a preferred embodiment the sintered cemented carbide has a Vickers hardness in the range from 2050 HV10 to 2250 HV10. In that the Vickers hardness ranges from 2050 HV10 to 2250 HV10 the wear resistance increases while the thereby increased brittleness is compensated for by the shoulder surface being concavely rounded to provide the concavely rounded insertion sliding path.

In a preferred embodiment the shoulder surface has in a cross-section in which a longitudinal axis of the cutting head blank extends a surface tangent in each of its surface points, wherein the surface tangent spans in each surface point a tapering angle with a normal axis being normal to the longitudinal axis and extending in said cross section, wherein the tapering angle is measured on parts of the shaft nearest to the surface point in said cross section, wherein the tapering angle is in the range from 30° to 75° where the shoulder surface emerges from the free end. The shoulder surface emerges thereby by a tapering which allows for a smooth enough cross section reduction of the insertion end in cross sections normal to the longitudinal axis and at the same time for a massive enough plastic deformation of the shaft to secure the insertion in the shaft against torque twisting.

In a preferred embodiment, wherein, where the shoulder surface is concavely rounded in said cross section, the tapering angle decreases along the longitudinal axis in said cross section towards the free end from smaller than 90° to a minimum tapering angle in the range from 30° to 75°. In this embodiment, the concave rounding of the insertion end has a curvature defined by the tapering angle which decreases towards the free end, e.g., by following an arc of a circle whose centre lies outside of the insertion end. When the minimum tapering angle is in said range, the insertion end has an optimum wedge shape to be inserted into the shaft under plastic shaft deformation.

In a preferred embodiment the shoulder surface emerges concavely rounded from the free end in order to provide the concavely rounded insertion sliding path. In this embodiment the shoulder surface emerges smoothly from the free end.

In a preferred embodiment the shoulder surface is joined to an outer surface point of the free end, wherein the outer surface point determines a maximum outer working diameter achievable by the free end. In this embodiment a diameter jump at the transition from the shoulder surface to the free end is avoided which lowers stress concentrations. The working diameter can be equal to or larger than an outer shaft diameter of the shaft.

In a preferred embodiment the cutting head blank has a lower insertion diameter and an upper insertion diameter, wherein the lower insertion diameter is measured where the shoulder surface starts being concavely rounded opposite to the free end, wherein the upper insertion diameter is measured where the shoulder surface emerges from the free end, wherein the ratio between the lower insertion diameter and the upper insertion diameter lies in the range from 35 % to 75 %. In that the ratio between the lower insertion diameter and the upper insertion diameter lies in the range from 35 % to 75 % the insertion end has an optimal wedge shape for plastic deformation of the shaft.

In a preferred embodiment the insertion end extends under the upper insertion diameter freely away from the shaft. The free end has accordingly a circular cylindrical shape so that a corresponding green body of the cutting head blank can be pressed homogeneously.

In a preferred embodiment the shoulder surface is in an as-sintered state. The shoulder surface has thus not been mechanically machined, e.g., grinded, after sintering, which reduces production costs.

In a preferred embodiment the sintered cemented carbide has a skeleton structure made from tungsten carbide, wherein the tungsten carbide has an average grain size in the range from 0.1 µm to 1.8 µm, preferably from 0.2 µm to 1.0 µm. The tungsten carbide grain size in these ranges improves wear resistance under machining man-made composite wood materials conditions and keeps once grinded cutting edges on parts of the free end sharper for a longer time.

The grain size is measured as "linear intercept length", in accordance with the international standard ISO 4499-2:2008(E). EBSD images of polished sections of the cutting head blank serve as measurement basis. The measurement methodology on such images is, for example, described in: K. P. Mingard et al., "Comparison of EBSD and conventional methods of grain size measurement of hard metals", Int. Journal of Refractory Metals & Hard Materials 27 (2009) 213-223".

In a preferred embodiment the cutting head blank is terminated by an insertion chamfer opposite to the free end, wherein the insertion chamfer sharpens the insertion end under an at least section wise circumferentially extending edge formation. The insertion chamfer makes it easier to insert the insertion end into the shaft and improves the alignment of the insertion end with respect to the shaft.

In a preferred embodiment the insertion chamfer extends under a chamfer angle lying in the range from 15° to 50°. This chamfer angle improves self-aligning of the insertion end under its insertion into the shaft.

In a preferred embodiment the cutting head blank is inserted such that a bottom gap is kept with respect to the shaft. The bottom gap reduces the amount of shock energy that can enter the insertion end via the shaft.

In a preferred embodiment the sintered cemented carbide has: (cobalt + nickel) in the range from 1.5 to 4.5 weight percent, chromium in the range from 0.15 to 0.6 weight percent; and balance (tungsten carbide + unavoidable impurities).

In that (cobalt + nickel) lies in the range from 1.5 to 4.5 weight percent and chromium in the range from 0.15 to 0.6 weight percent improves not only the mechanically wear resistance but also the chemically wear resistance under contact with man-made composite wood materials whose organic, man-made matrix is chemically aggressive.

Tungsten carbide is the major constituent (larger than 90 weight percent) of the sinter cemented carbide forming said skeleton structure by which the sintered cemented carbide has its relatively high base hardness needed to machine man-made composite wood materials.

Unavoidable impurities can be present from material recycling, the equipment used to prepare the sintered cemented carbide and the environment the sintered cemented carbide has been prepared in. The unavoidable impurities are typically present up to 0.25 weight percent and can comprise at least one of molybdenum, vanadium, niobium and tantalum.

Preferably the sintered cemented carbide consists of (cobalt + nickel) in the range from 1.5 to 4.5 weight percent, chromium from 0.15 to 0.6 weight percent, tungsten carbide from 94.65 to 98.35 weight percent; and unavoidable impurities up to 0.25 weight percent.

The cutting tool is designed for cutting man-made composite wood materials, wherein the cutting tool is made from a cutting tool blank according to the claims and embodiments, including the ones shown in the figures enclosed, relating to the cutting tool blank. The cutting tool is made, e.g., by grinding cutting edges into the free end. Since the cutting tool is made from the cutting tool blank the advantages described for the cutting tool blank are also realized by the cutting tool.

In a preferred embodiment the cutting tool is a milling tool for cutting under a rotation with respect to a longitudinal axis.

Further advantages of the invention will be apparent from the following description of embodiments with reference to the accompanying figures.

The figures show:
- Fig. 1:: a schematically depicted cutting tool blank according to a first embodiment;
- Fig. 2:: a schematically depicted cutting tool blank according to a second embodiment;
- Fig. 3:: a schematically depicted cutting tool blank according to a third embodiment; and
- Fig. 4:: a schematically depicted cutting tool blank according to a fourth embodiment.

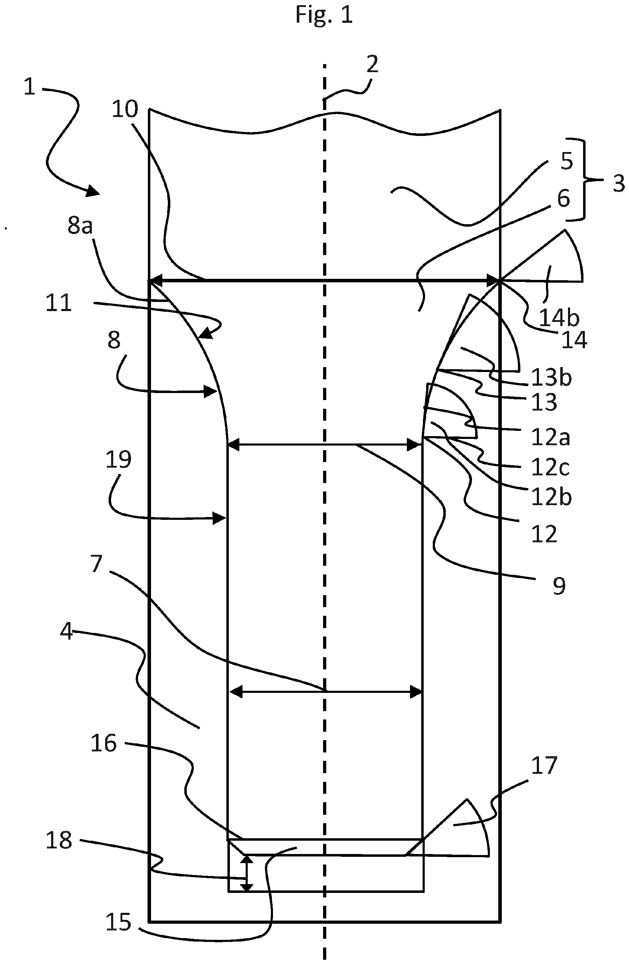

Fig. 1 shows a cutting tool blank 1 according to a first embodiment in a cross section in which a longitudinal axis 2 extends. The cutting tool blank 1 comprises a cutting head blank 3 and a shaft 4 each extending along the longitudinal axis 2. The cutting head blank 3 is a monolithic body made from a sintered cemented carbide having a Vickers hardness in the range from 1700 HV10 to 2400 HV10. The Vickers hardness HV10 of the sintered cemented carbide is measured according to the international standard ISO 3878:1991 ("Hardmetals - Vickers hardness test"). The shaft 4 is made from a steel.

The cutting head blank 3 has a free end 5 extending freely away from the shaft 4 and an insertion end 6 emerging from the free end 5 into the shaft 4.

The insertion end 6 is press fitted into the shaft 4 under plastic shaft deformation, such that the shaft 4 has been widened plastically, e.g., an insertion diameter 7 of the insertion end 6 is 1 % to 5 % larger than a corresponding opening diameter of the shaft 4 before the insertion end 6 was inserted, e.g., the opening diameter can be 10 mm before insertion and the insertion diameter 7 can then be for example 10.2 mm, i.e., the insertion diameter 7 is then 2 % larger than the opening diameter.

Since the insertion diameter 7 of the insertion end 6 is 1 % to 5 % larger than the opening diameter of the shaft 4 before insertion (measured at the same axial position indicated by the double-headed arrow used to denote the insertion diameter 7, the plastic shaft deformation is sufficient to secure the insertion end 6 against axial withdrawal and torque twisting with respect to the longitudinal axis 2, respectively, thus, the insertion end 6 can be and is in the first embodiment free from structural anchoring elements protruding inwardly, e.g., free from notches, and/or outwardly, e.g., free from tongue like elements used in tongue and groove connections.

The insertion end 6 has a shoulder surface 8 which is concavely rounded in the cross section depicted in Fig. 1, such that the width of insertion end 6 increases along the longitudinal axis towards the free end 5. The shoulder surface 8 is concavely rounded to provide a concavely rounded insertion sliding path 8a along which the shoulder surface 8 slides in contact with the shaft 8 under the insertion of the insertion end 6 into the shaft 4.

The shoulder surface 8 is concavely rounded where it emerges from the free end 5, such that the insertion end 6 is notch free where the shoulder surface 8 extends (the shoulder surface 8 is in the first embodiment entirely concavely rounded). The shoulder surface 8 is concavely rounded without thereby shaping a notch in the insertion end 6; the person skilled in the art appreciates that a notch would appear as an indentation, e.g., a semi-circular indentation, in the insertion end 6 relative to the remainder of the insertion end 6.

The shoulder surface 8 widens the insertion end 6 in said cross section from a lower insertion diameter 9 located opposite to the free end 5 towards an upper insertion diameter 10, being larger than the lower insertion diameter 9 and located where the shoulder surface 8 emerges from the free end 5. The ratio between the lower insertion diameter 9 and the upper insertion diameter 10 lies in the range from 35 % to 75 %, e.g., 55 % for the first embodiment.

The insertion end 6 is a body of revolution with respect to the longitudinal axis 2, the same holds for the free end 5.

The shoulder surface 8 contacts a counter shoulder surface 11 of the shaft 4 both radially and axially with respect to the longitudinally axis 2 in each of its surface points. The counter shoulder surface 11 follows the shoulder surface 8 in said cross section.

Fig. 1 shows exemplarily three surface points 12, 13 and 14 of the shoulder surface 8 in which the shoulder surface 8 has a tapering angle. The shoulder surface 8 has further surface points, apart from the surface points 12, 13 and 14 and a tapering angle in each surface point as described in the following.

The surface point 12 has a surface tangent 12a, which spans a tapering angle 12b with a normal axis 12c begin normal (perpendicular) to the longitudinal axis 2 in said cross section. The tapering angle 12b is measured on parts of the counter shoulder surface 11 where it contacts the surface point 12 in said cross section.

The tapering angle 13b of the surface point 13 and the tapering angle 14b of the surface point 14 are shown as well in Fig. 1 and are measured in the same way the tapering angle 12 is measured, the same holds for the tapering angle of the shoulder surface 8 in each surface point of the shoulder surface 8.

The tapering angle, exemplified by the tapering angles 12b, 13b and 14b, decreases continuously along the longitudinal axis 2 in said cross section towards the free end 5 from smaller 90° to a minimum tapering angle, which is in the first embodiment the tapering angle 14b, which lies in the range from 30° to 75°, e.g., 38° in the first embodiment.

The tapering angle 14b lies in the range from 30° to 75°, e.g., 38° in the first embodiment, which is where the shoulder surface 8 emerges from the free end 5. The surface point 14 is shared with the free end 5 and is therefore also an outer surface point 14 of the free end 5 which defines the upper insertion diameter 10. The tangent of the surface point 14 is a linear extrapolation of the shoulder surface 8 in said cross section. The person skilled in the art will appreciate that this is what is meant when the tangent is positioned in the surface point 14 being the surface point 14 where the shoulder surface 8 is joined to the free end 5.

Since the free end 5 extends under the insertion diameter 10 along the longitudinal axis 2 the outer surface point 14 defines a maximum working diameter 10 achievable by the free end 5 with respect to the longitudinal 2.

The shoulder surface 8 is concavely rounded to follow an arc shape whose centre lies outside of the insertion end 6, i.e., a radius vector having constant length can be drawn in said cross section to touch each surface point, e.g., the surface points 12, 13 and 14, of the insertion end 6 while the radius vector originates from said centre outside of the insertion end 6. However, the shoulder surface 8 can be concavely rounded to follow a different curve as well, e.g., the shoulder surface 8 can follow a section of an elliptical curve.

The insertion end 6 is terminated by an insertion chamfer 15 opposite to the free end 5. The insertion chamfer 15 sharpens the insertion end under a circumferentially extending edge formation 16 for a better alignment of the insertion end 6 under its axial insertion into the shaft 4. The insertion chamfer 15 extends under a constant insertion chamfer angle 17 which is measured analogously to the tapering angle of the shoulder surface 8, e.g., the tapering angle 12b, and lies in the range from 15° to 70°, e.g., 45° in the first embodiment; the insertion chamfer angle 17 lies thereby in the range from 15° to 50°.

Fig. 1 shows that the insertion end 6 is inserted into the shaft 4 under a bottom gap 18 with respect to the shaft 4 in order to limit axial shock transfer from the shaft 4 into the insertion end 6 and vice versa.

The insertion end 6 has a cylindrical insertion surface 19 emerging from the shoulder surface 8 and extending along the longitudinal axis 2 deeper into the shaft 4. The cylindrical insertion surface 19 contacts the shaft 4 radially. The cylindrical insertion surface 19 is advantageous for pressing a corresponding cemented carbide powder into a green body from a perspective of achieving a homogeneous pressing pressure.

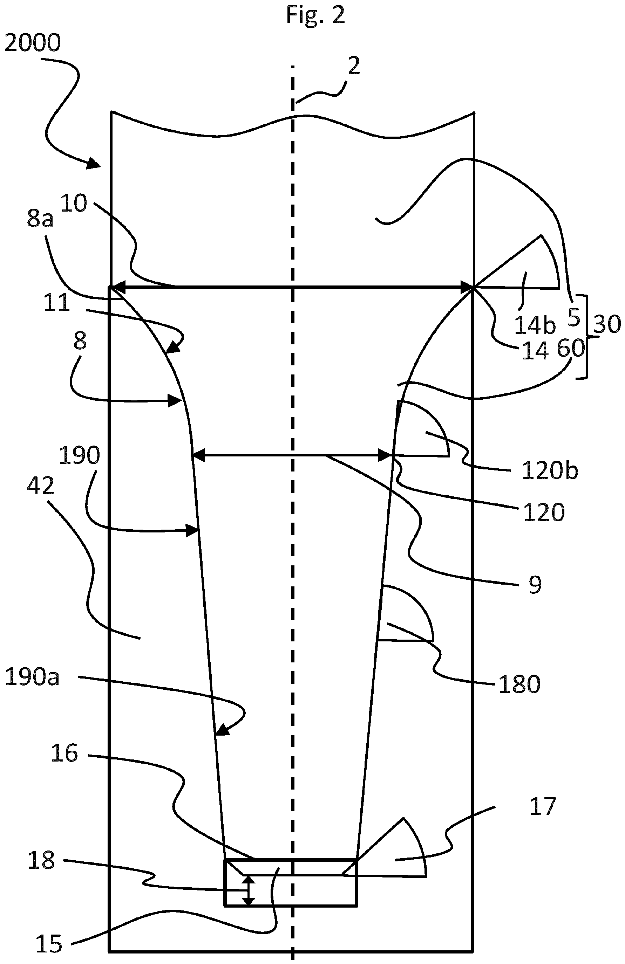

Fig. 2 shows a cutting tool blank 2000 according to a second embodiment in a cross section analogous to the cross section in Fig. 1.

The cutting tool blank 2000 is analogous to the cutting tool blank 1 except for that the insertion end 6 is replaced by an insertion end 60 and in that the shaft 4 is replaced by a shaft 42; the insertion end 60 and the free end 5 form a cutting head blank 30 made from the cemented carbide the cutting head blank 3 is made from. The insertion end 60 differs from the insertion end 6 in that the insertion end 60 has instead of the cylindrical insertion surface 19 a conical insertion surface 190 which extends along the longitudinal axis 2 under a constant further tapering angle 180 which is measured analogously to the tapering angle of the shoulder surface 8, e.g., the tapering angle 12b.

The shaft 42 differs from the shaft 4 in that it has a lower counter surface 190a which follows the conical course of the conical insertion surface 190 due to the plastic deformation caused by the insertion of the insertion end 60 into the shaft 42.

The constant further tapering angle 180 lies in the range from 70° to below 90°, e.g., 86° for the second embodiment, and defines a maximum tapering angle 120b of the shoulder surface 8 where the shoulder surface 8 starts being concavely rounded, i.e., the tapering angle 120b in the surface point 120 at the lower insertion diameter 9 is equal to the constant further tapering angle 180. The conical insertion surface 190 has the advantage that it increases the contact area for contacting the shaft 4 in comparison to the cylindrical insertion surface 19.

The insertion end 60 is inserted into the shaft 42 analogously to the first embodiment such that also the insertion end 60 plastically deforms the shaft 42 under plastic shaft deformation in order to secure the insertion end 60 against torque twisting and axial withdrawal, wherein the plastic deformation is massive to the extent that it elongates the grains of the steel the shaft 42 is made from, just like in the first embodiment regarding the shaft 4.

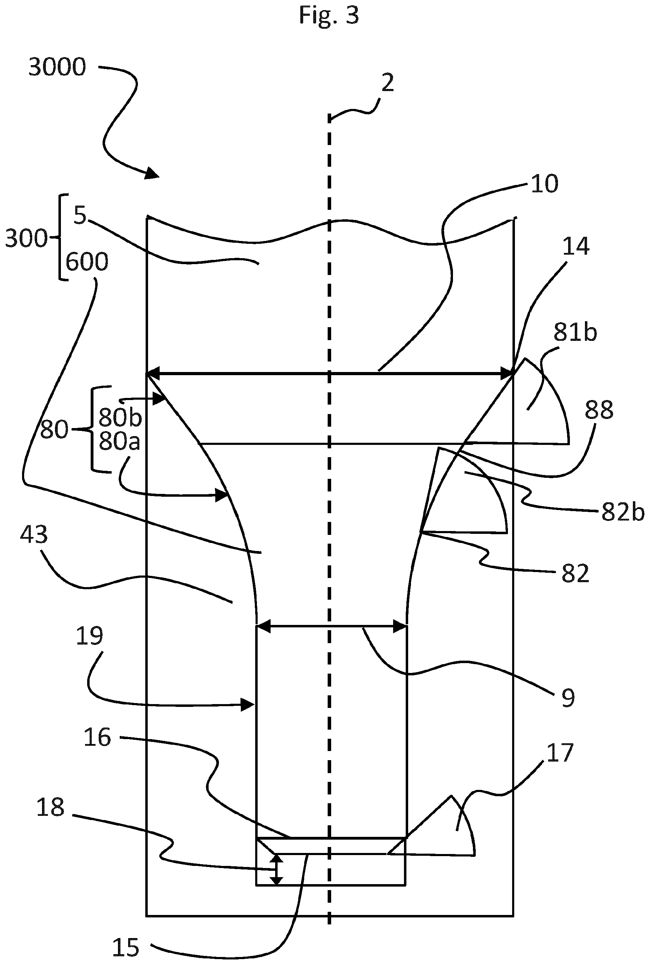

Fig. 3 shows a cutting tool blank 3000 according to a third embodiment in a cross section analogous to the cross section in Fig. 1. The cutting tool blank 3000 is analogous to the cutting tool blank 1 except for that the insertion end 6 is replaced by an insertion 600 and in that the shaft 4 is replaced by a shaft 43; the insertion end 600 and the free end 5 form a cutting head blank 300 made from the cemented carbide the cutting head blank 3 is made from.

The insertion end 600 differs from the insertion end 6 in that the shoulder surface 8 is replaced by a shoulder surface 80. The shoulder surface 80 emerges from the free end 5 in said cross section linearly under an upper tapering angle 81b and then becomes concavely rounded like the shoulder surface 8. Thus, the shoulder surface 80 has a conical sub surface 80b by which it widens the insertion end 600 towards the free end 5 and a concavely rounded sub surface 80a by which it widens the insertion end 600 towards the free end 5. The upper tapering angle 81b is measured analogously to the tapering angle 12b, the same holds for the tapering angle 82b.

The sub surface 80b is joined to the free end by sharing the outer surface point 14 with the free end 5 and provides a concavely rounded sliding path 88 functioning similarly to the sliding path 8a.

The sub surface 80a tapers analogously to the shoulder surface 8 by having a tapering angle in each of its surface points, e.g., a surface point 82 of the sub surface 80a has a tapering angle 82b, analogously to the tapering angle 12b. The tapering angle 81b is the minimum tapering angle to which the tapering angle of the sub surface 80a decreases along the longitudinal axis 2 towards the free end 4.

The shaft 43 differs from the shaft 4 to the extent that the shaft 43 follows the course of the shoulder surface 80.

The insertion end 600 has the advantage that it is geometrically strengthened in comparison to the insertion end 6 due to the conical sub surface 80b by which the cross section of the insertion end 600 is increased for the given upper insertion diameter 10 relative to the entirely concavely rounded shoulder surface 8.

The insertion end 600 is inserted into the shaft 43 analogously to the first embodiment such that also the insertion end 600 plastically deforms the shaft 43 under plastic shaft deformation in order to secure the insertion end 600 against torque twisting and axial withdrawal, wherein the plastic deformation is massive to the extent that it elongates the grains of the steel the shaft 43 is made from, just like in the first embodiment regarding the shaft 4.

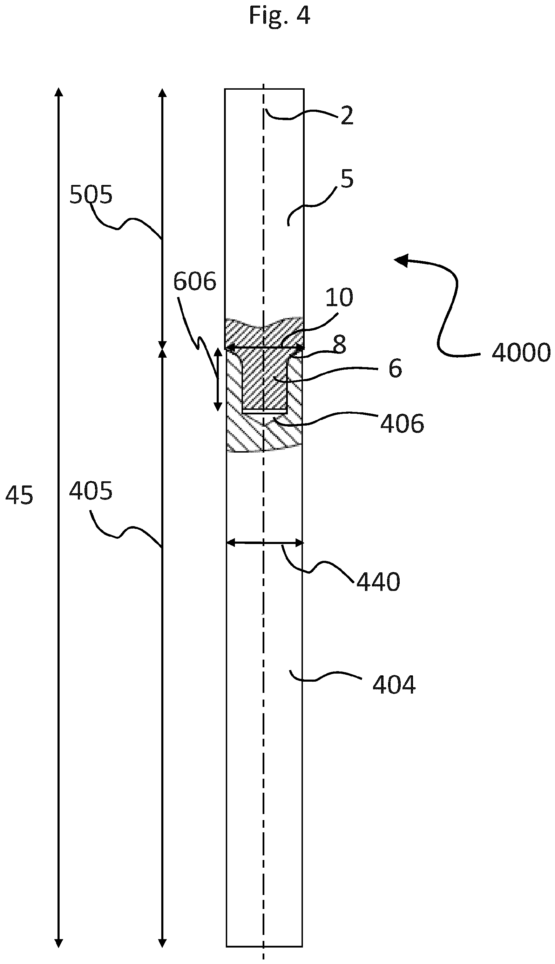

Fig. 4 shows a cutting tool blank 4000 according to a fourth embodiment in a cross section analogous to the cross section in Fig. 1. The cutting tool blank 4000 has the cutting head blank 3 of the first embodiment and a shaft 404 each extending along the longitudinal axis 2.

The shaft 404 differs from the shaft 4 in that the shaft 404 has an outer shaft diameter 440 which is smaller than the upper insertion diameter 10 under which the free end 5 extends along the longitudinal axis 2. Thus, the free end 104 protrudes circumferentially over the shaft 404 which makes it easier to manufacture a plunge milling tool out of the cutting tool blank 4000, vice versa, the upper insertion diameter 10 could have been made larger than the outer shaft diameter 404.

The shaft 404 differs further from the shaft 4 in that the shaft 404 extends under a shaft length 405 making the shaft 404 longer along the longitudinal axis 2 than the free end 5. The free end 5, shown in its entire length 505 along the longitudinal axis 2 in Fig. 4, is thus shorter than the shaft length 405.

The sum of the shaft length 405 and the free end length 505 yields a total length 45 of the cutting tool blank 4000. The free end length 505 contributes exemplarily 30 % to the total length 45 which is in the range from 30 % to 50 % being advantageous for supporting the shaft 405 in a shaft holder for machining man-made composite wood materials.

The insertion end 6 extends under an insertion end length 606 along the longitudinal axis 2. The ratio between the insertion end length 606 and the free end length 505 is exemplarily 25 % which is in the range from 10 % to 40 % allowing for a good support of the cutting head blank 4 under both axial forces and bending moments. The shaft 404 differs further from the shaft 404 in that it is has a blind hole 406 beneath the insertion end 6 stemming from drilling a corresponding opening into the shaft 404.

The insertion end 6 is inserted into the shaft 404 analogously to the first embodiment such that also the insertion end 6 plastically deforms the shaft 404 under plastic shaft deformation in order to secure the insertion end 6 against torque twisting and axial withdrawal, wherein the plastic deformation is massive to the extent that it elongates the grains of the steel the shaft 404 is made from, just like in the first embodiment regarding the shaft 4.

The cutting head blanks 3, 30 and 300 are each made from the sintered cemented carbide which has a skeleton structure made from tungsten carbide grains having a grain size in the range from 0.1 µm to 1.8 µm, preferably from 0.2 µm to 1.0 µm, e.g., a grain size of 0.5 µm. The grain size is measured as "linear intercept length", in accordance with the international standard ISO 4499-2:2008(E). EBSD images of polished sections of the cutting head blanks 3, 30 and 300 serve as measurement basis. The measurement methodology on such images is, for example, described in: K. P. Mingard et al., "Comparison of EBSD and conventional methods of grain size measurement of hard metals", Int. Journal of Refractory Metals & Hard Materials 27 (2009) 213-223".

The sintered cemented carbide has (cobalt + nickel) in the range from 1.5 to 4.5 weight percent, chromium from 0.15 to 0.6 weight percent; and balance (tungsten carbide + unavoidable impurities).

The cutting tool blanks 1, 2000, 3000 and 4000 can each be manufactured into cutting tools designed for cutting man-made composite wood materials in that their free ends 5 are grinded to have a cutting edge geometry. It has been found that the presence of cobalt and nickel in said ranges of the sintered cemented carbide betters wear resistance for cutting man-made composite wood materials in combination with the tungsten carbide grain size being in said ranges. The additional presence of chromium in said ranges increases said wear resistance even further.

The shoulder surfaces 8 and 80 are in an as sintered state which reduces the manufacturing costs without limiting the cutting performance because the described press fitting is achieved by massive plastic deformation which does not rely on a precise interference fit but on the lower insertion diameter 9 merely being significantly larger than a corresponding opening of the shafts 4, 42, 43 and 404 prior to insertion of the insertion ends 6, 60 and 600.

The relative high Vickers hardness in the range from 1700 HV10 to 2400 HV10 makes the cutting head blanks 3, 30 and 300 inherently brittle. The corresponding problematic stress sensitivity is compensated for by the shoulder surfaces 8 and 80 being at least section-wise concavely rounded to provide a concavely rounded insertion sliding path 8 and 88, respectively.

## Claims

1. A cutting tool blank (1, 2000, 3000, 4000) comprising a cutting head blank (3, 30, 300) made from a sintered cemented carbide having a Vickers hardness in the range from 1700 HV10 to 2400 HV10 and a shaft (4, 42, 43, 405), wherein the cutting head blank (3, 30, 300) has a free end (5) which extends freely away from the shaft (4, 42, 43, 405) and an insertion end (6, 60, 600) press-fitted into the shaft (4, 42, 43, 405) under plastic shaft deformation, wherein the insertion end (6, 60, 600) has a shoulder surface (8, 80) which emerges from the free end (5) and is at least section-wise concavely rounded to provide a concavely rounded insertion sliding path (8a, 88).

2. The cutting tool blank (1, 2000, 3000, 4000) according to claim 1, wherein the sintered cemented carbide has a Vickers hardness in the range from 2050 HV10 to 2250 HV10.

3. The cutting tool blank (1, 2000, 3000, 4000) according to any of the preceding claims, wherein the shoulder surface (8, 80) has in a cross-section in which a longitudinal axis (2) of the cutting head blank (3, 30, 300) extends a surface tangent (12a) in each of its surface points, wherein the surface tangent (12a) spans in each surface point (12, 13, 14, 82, 120) a tapering angle (12b, 13b, 14b, 81b, 82b, 120b) with a normal axis (12c) being normal to the longitudinal axis (2) and extending in said cross section, wherein the tapering angle (12b, 13b, 14b, 81b, 82b, 120b) is measured on parts of the shaft (4, 42, 43, 405) nearest to the surface point (12, 13, 14, 82, 120) in said cross section, wherein the tapering angle (12, 13, 14, 82, 120) is in the range from 30° to 75° where the shoulder surface (8, 80) emerges from the free end (5).

4. The cutting tool blank (1, 2000, 3000, 4000) according to claim 3, wherein, where the shoulder surface (8, 80) is concavely rounded in said cross section, the tapering angle (12, 13, 14, 82, 120) decreases along the longitudinal axis (2) in said cross section towards the free end (5) from smaller than 90° to a minimum tapering angle (12, 13, 14, 82, 120) lying in the range from 30° to 75°.

5. The cutting tool blank (1, 2000, 3000, 4000) according to any of the preceding claims, wherein the shoulder surface (8, 80) emerges concavely rounded from the free end (5) in order to provide the concavely rounded insertion sliding path.

6. The cutting tool blank (1, 2000, 3000, 4000) according to any of the preceding claims, wherein the shoulder surface (8, 80) is joined to an outer surface point (14) of the free end (5), wherein the outer surface point (14) determines a maximum outer working diameter (10) achievable by the free end (5).

7. The cutting tool blank (1, 2000, 3000, 4000) according to any of the preceding claims, wherein the cutting head blank (3, 30, 300) has a lower insertion diameter (9) and an upper insertion diameter (10), wherein the lower insertion diameter (9) is measured where the shoulder surface (8, 80) starts being concavely rounded opposite to the free end (5), wherein the upper insertion diameter (10) is measured where the shoulder surface (8, 80) emerges from the free end (5), wherein the ratio between the lower insertion diameter (9) and the upper insertion diameter (10) lies in the range from 35 % to 75 %.

8. The cutting tool blank (1, 2000, 3000, 4000) according to claim 7, wherein the free end (5) extends under the upper insertion diameter (10) freely away from the shaft (4, 42, 43, 405).

9. The cutting tool blank (1, 2000, 3000, 4000) according to any of the preceding claims, wherein the shoulder surface (8, 80) is in an as-sintered state.

10. The cutting tool blank (1, 2000, 3000, 4000) according to any of the preceding claims, wherein the sintered cemented carbide has a skeleton structure made from tungsten carbide, wherein the tungsten carbide has an average grain size in the range from 0.1 µm to 1.8 µm.

11. The cutting tool blank (1, 2000, 3000, 4000) according to any of the preceding claims, wherein the cutting head blank (3, 30, 300) is terminated by an insertion chamfer (15) opposite to the free end (5), wherein the insertion chamfer (15) sharpens the insertion end (6, 60, 600) under an at least section wise circumferentially extending edge formation (16).

12. The cutting tool blank (1, 2000, 3000, 4000) according to claim 11, wherein the insertion chamfer (15) extends under a chamfer angle (17) lying in the range from 15° to 50°.

13. The cutting tool blank (1, 2000, 3000, 4000) according to any of the preceding claims, wherein the cutting head blank (3, 30, 300) is inserted such that a bottom gap (18) is kept with respect to the shaft (4, 42, 43, 405).

14. The cutting tool blank (1, 2000, 3000, 4000) according to any of the preceding claims, wherein the sintered cemented carbide has:
(cobalt + nickel) in the range from 1.5 to 4.5 weight percent,
chromium in the range from 0.15 to 0.6 weight percent;
and balance (tungsten carbide + unavoidable impurities).

15. A cutting tool, wherein the cutting tool is designed for cutting man-made composite wood materials, wherein the cutting tool is made from a cutting tool blank (1, 2000, 3000, 4000) according to any one of claims 1 to 14.
